# EUROPEAN PATENT APPLICATION

(11) **EP 1 584 835 A1**
(43) Date of publication of application: **12.10.2005**
(21) Application number: 05006683.6
(22) Date of filing: 26.03.2005
(51) Int. Cl.: F16D 65/20, F16D 65/14

(54) **Disc brake caliper with parking brake mechanism.**

(30) Priority: 06.04.2004 US 819249
(71) Applicant: Akebono Corporation, Farmington Hills, Michigan 48331 (US)
(72) Inventor: Ohta, Makoto, West Bloomfield, Michigan 48322 (US)
(74) Representative: Müller, Thomas Michael

(57) **Abstract**

A parking brake mechanism (10) in a caliper body (12) has a piston assembly (14) slidably supported within the caliper body. A first gear (18) is rotatable in the caliper body about a first axis. A second gear (20) is rotatable in the caliper body about a second axis. The first and second axes are generally perpendicular. A ball-ramp (16) assembly is operably disposed between the second gear and the piston assembly. The ball-ramp assembly translates rotational displacement of the second gear into axial displacement of the piston assembly to actuate the parking brake mechanism.

## Description

### FIELD OF THE INVENTION

The present invention relates to a parking brake mechanism and, more particularly, to a parking brake mechanism integrally incorporated into a disc brake caliper assembly.

### BACKGROUND OF THE INVENTION

Parking input mechanisms integrated into disc brake assemblies can be placed into one of two categories. The first category includes ball-ramp type mechanisms. These mechanisms have an input shaft substantially axially aligned with a piston braking mechanism. The input shaft rotates to manipulate a ball-ramp assembly which, in turn, axially displaces an element of the ball-ramp assembly. The displaced element displaces the piston to engage the parking brake. The second category includes direct drive mechanisms. These mechanisms typically include an input lever with a cam-type component. The input lever rotates and the cam-type component axially displaces a thrust shaft to engage a piston which, in turn, causes the piston to engage the parking brake. While these two systems have adequately performed their objectives, problems can arise.

Since the ball-ramp type assembly requires an input shaft substantially axially aligned with the piston, its spatial versatility is limited. On the other hand, the direct drive assembly is functionally limited because it includes a cam-type lever. A cam-type lever is disfavorable because it has a limited range of mechanical efficiency.

### SUMMARY OF THE INVENTION

The present invention provides a parking brake mechanism integrally incorporated in a disc brake assembly. The mechanism generally includes a caliper body and a piston slidably supported for axial displacement therein. The mechanism further includes a first gear adapted to rotate about a first axis and a second gear adapted to rotate about a second axis, which is generally perpendicular to the first axis. Furthermore, the second gear is attached to a ball-ramp assembly. The ball-ramp assembly translates the rotational displacement of the second gear into axial displacement of the piston to actuate the parking brake. In a further aspect of the present invention, an input shaft is provided to rotatably drive the first gear. In yet a further aspect of the present invention, a parking lever is provided to rotatably drive the input shaft. In yet a further aspect of the present invention, the first and second gears are bevel gears.

In still a further aspect of the present invention, a ball-ramp assembly is provided which has a first ramp plate with a first ramped surface, a second ramp plate with a second ramped surface. The ball-ramp assembly further includes a bearing member disposed between the ramped surfaces. Also, the ramped surfaces each include a shallow portion and a deep portion. The ramp plates are configured such that the bearing member simultaneously contacts the shallow portions when in a first position, and the deep portions, when in a second position. The bearing member is generally a ball bearing.

Further areas of applicability of the present invention will become apparent from the detailed description. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Figure 1 is a sectional view of a parking brake mechanism integrally incorporated in a disc brake caliper in accordance with the present invention.
Figure 2 is an end elevational view of a ball-ramp assembly in accordance with the present invention.
Figure 3 is a partial sectional view of a ball-ramp assembly in a first position taken along line A-A of Figure 2.
Figure 4 is a partial sectional view of a ball-ramp assembly in a second position taken along line A-A of Figure 2.

### DETAILED DESCRIPTION OF THE PREFERRED EMBODIMENTS

The following description of the preferred embodiments is merely exemplary in nature and is in no way intended to limit the scope of the invention, its application, or its uses.

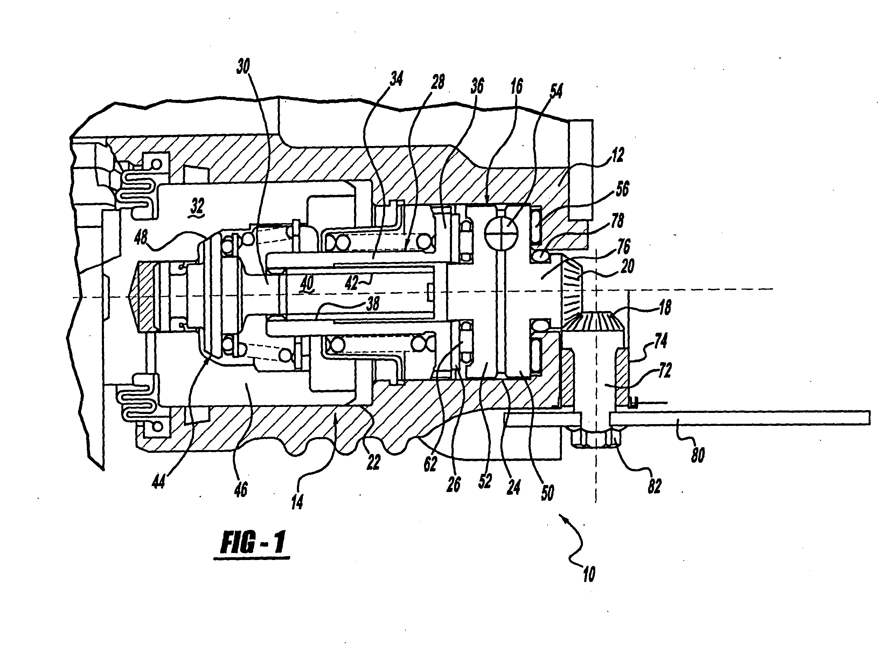

Figure 1 illustrates a parking brake mechanism 10 incorporated in a disc brake caliper assembly in accordance with the present invention. The parking brake mechanism 10 generally includes a caliper body 12, a piston assembly 14, a ball-ramp assembly 16, a first gear 18, and a second gear 20.

The caliper body 12 includes a piston cavity 22 and a ball-ramp cavity 24. The piston cavity 22 contains a first portion of the piston assembly 14. The ball-ramp cavity 24 contains a second portion of the piston assembly 14 and the entire ball-ramp assembly 16. The piston assembly 14 includes a piston 32, a spindle 30, a sleeve nut 28, and a thrust washer 26. The piston 32 includes a body portion 46 and a pocket portion 48. The body portion 46 is slidably supported for axial displacement in the piston cavity 22. The spindle 30 includes a solid cylindrical portion 40, a male threaded portion 42, and a cone seat portion 44. The cone seat portion 44 is adapted to selectively engage the pocket portion 48 of the piston 32. The sleeve nut 28 includes a hollow cylindrical portion 34, a female threaded portion 38, and a flange portion 36. The female threaded portion 38 is in threaded engagement with the male threaded portion 42 of the spindle 30. The thrust washer 26 includes a flat metal washer disposed between the ball-ramp assembly 16 and the flange portion 36. The thrust washer 26 is adapted to transfer axial loads from the ball-ramp assembly 16 to the flange portion 36.

Figures 1-4, in combination, illustrate a ball-ramp assembly 16 in accordance with the parking brake mechanism 10 of the present invention. The ball-ramp assembly 16 generally includes a first ramp plate 50, a second ramp plate 52, and a bearing member 54 between them. The first ramp plate 50 includes a first bearing surface 58, which has a plurality of first ramped surfaces 60. The first ramp plate 50 is supported for rotational displacement in the ball-ramp cavity 24 by first needle bearings 56. The second ramp plate 52 includes a second bearing surface 64, which has a plurality of second ramped surfaces 66. The second ramp plate 52 is supported for rotational and axial displacement in the ball-ramp cavity 24 by second needle bearings 62.

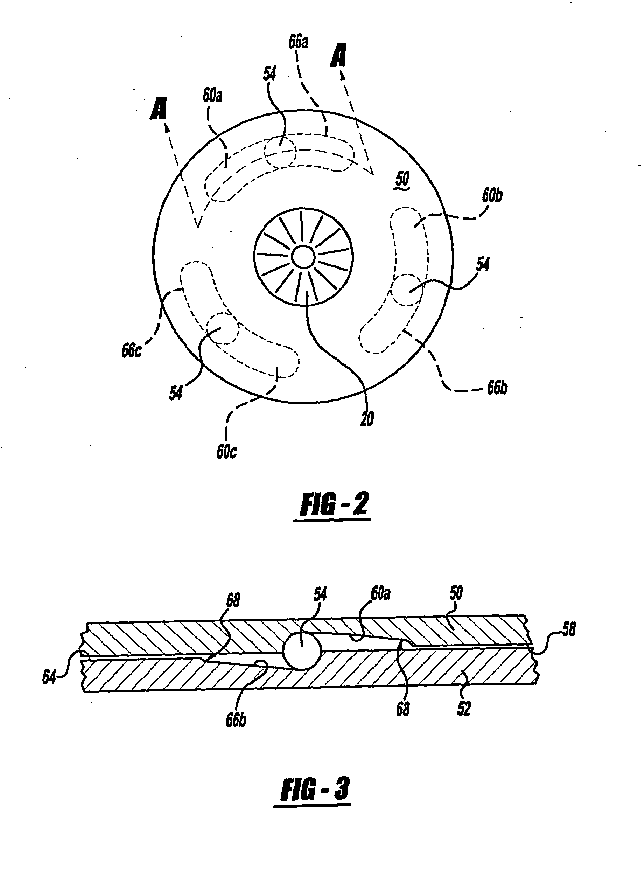

Figures 2-4 illustrate in detail the first and second bearing surfaces 58, 64. As previously discussed, the first and second bearing surfaces 58, 64 each include a plurality of first and second ramped surfaces 60, 66. Each of the plurality of ramped surfaces 60, 66 include a shallow portion 68 and a deep portion 70. In an exemplary embodiment, each plurality of first and second ramped surfaces 60, 66 includes three arch shaped ramped surfaces 60a, 60b, 60c, and 66a, 66b, 66c. The bearing member 54 is a steel ball bearing.

Figure 1 further illustrates that the first gear and second gears 18, 20 are beveled gears. It should be appreciated, however, that in an alternative embodiment, the first and second gears 18, 20 are screw gears. In yet another alternative embodiment, the first and second gears 18, 20 include a worm gear and a worm wheel. The first gear 18 is rigidly attached to an input shaft 72. The input shaft 72 is rotatably supported in the caliper body 12 by a bushing 74. The second gear 20 is rigidly attached to a thrust shaft 76. The thrust shaft 76 is rotatably supported in the caliper body 12 by an o-ring 78. The rotational axis of the input shaft 72 is generally perpendicular to the rotational axis of the thrust shaft 76. Lastly, a lever member 80 is attached to the input shaft 72 with a nut 82.

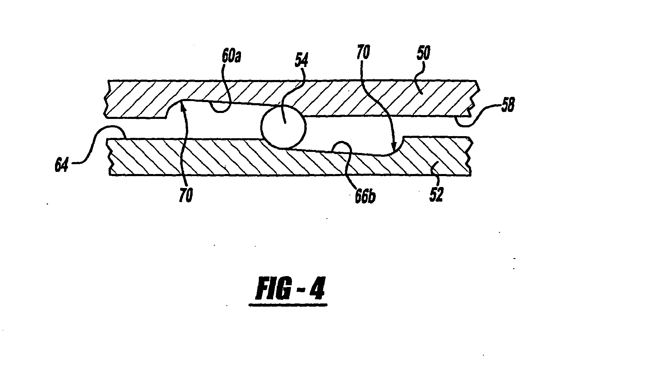

During operation, the lever member 80 is pivoted about a point near the center of the nut 82. This movement of the lever member 80 rotationally displaces the input shaft 72 and the first bevel gear 18. The first bevel gear 18 constantly engages the second bevel gear 20 to rotationally displace the thrust shaft 76 and the first ramp plate 50. The displacement of the first ramp plate 50 causes the bearing members 54. to displace from a first position, shown in Figure 3, to a second position, shown in Figure 4. The displacement of the bearing members 54 causes the second ramp plate 52 to axially displace relative to the first ramp plate 50. This causes the sleeve nut 28 to axially displace because the thrust washer 26 causes the second ramp plate 52 to operatively engage the sleeve nut 28. Displacement of the sleeve nut 28 causes the spindle 40 to axially displace because its female threaded portion 38 constantly engages the male threaded portion 42 of the spindle 40. The cone seat portion 44 of the spindle 40 engages the pocket portion 48 of the piston 32, which axially displaces the piston 32 to engage the parking brake mechanism 10. The lever member 80 is pivoted in an opposite direction to disengage the parking brake mechanism 10.

This description of the invention is merely exemplary in nature and, thus, variations that do not depart from the scope of the invention are intended to be within its scope.

Such variations are not to be regarded as a departure from the spirit and scope of the invention.

## Claims

1. A parking brake mechanism for a disc brake caliper, said mechanism comprising:
a caliper body;
a piston slidably supported for axial displacement within said caliper body;
a first gear supported by said caliper body for rotational displacement about a first rotational axis;
a second gear in constant meshing engagement with said first gear, said second gear supported by said caliper body coaxially with said piston for rotational displacement about a second rotational axis, wherein said second rotational axis is substantially perpendicular to said first rotational axis; and
a ball-ramp assembly operably disposed between said second gear and said piston adapted to translate said rotational displacement of said second gear into axial displacement of said piston, thereby actuating the parking brake mechanism.

2. The parking brake mechanism of claim 1, further comprising an input shaft for rotatably driving said first gear.

3. The parking brake mechanism of claim 2, further comprising a lever for rotatably driving said input shaft.

4. The parking brake mechanism of claim 1, wherein said first and second gears are bevel gears.

5. The parking brake mechanism of claim 1, wherein said first and second gears are screw gears.

6. The parking brake mechanism of claim 1, wherein said first gear is a worm gear and said second gear is a worm wheel.

7. The parking brake mechanism of claim 1, wherein said first gear is a worm wheel and said second gear is a worm gear.

8. The parking brake mechanism of claim 1, wherein said ball-ramp assembly includes a first ramp plate having a first ramped surface, a second ramp plate having a second ramped surface, and a bearing member disposed therebetween adapted to move on said first and second ramped surfaces.

9. The parking brake mechanism of claim 8, wherein said first and second ramped surfaces each include a shallow portion and a deep portion and are configured such that said bearing member simultaneously contacts said deep portions when in a first position and said shallow portions when in a second position, thereby causing axial displacement of said second ramp plate.

10. The parking brake mechanism of claim 8, wherein said bearing member is a ball bearing.

11. A parking brake mechanism for a disc brake caliper, said mechanism comprising:
a caliper body;
a piston slidably supported for axial displacement along a braking axis within said caliper body;
an input shaft having a first bevel gear supported by said caliper body for rotational displacement about a rotational axis substantially perpendicular to said braking axis;
a thrust shaft having a second gear in constant meshing engagement with said first gear, said thrust shaft supported by said caliper body for rotational displacement about said braking axis; and
a ball-ramp assembly operably disposed between said second gear and said piston adapted to translate said rotational displacement of said second gear into axial displacement of said piston, thereby actuating the parking brake mechanism.

12. The parking brake mechanism of claim 11, wherein said ball-ramp assembly includes a first ramp plate having a first ramped surface, a second ramp plate having a second ramped surface, and a bearing member disposed therebetween adapted to move from a first position to a second position on said first and second ramped surfaces.

13. The parking brake mechanism of claim 12, wherein said first and second ramped surfaces each include a shallow portion and a deep portion and are configured such that said bearing member simultaneously contacts said deep portions when in said first position and said shallow portions when in said second position, thereby causing axial displacement of said second ramp plate.

14. The parking brake mechanism of claim 12, wherein said bearing member is a ball bearing.

15. A disc brake caliper assembly having an integral parking brake mechanism, said assembly comprising:
a caliper body having a piston cavity and a ball-ramp cavity;
a piston slidably supported for axial displacement within said piston cavity;
a ball-ramp assembly supported in said ball-ramp cavity operable to axially displace said piston;
a first gear supported by said caliper body for rotational displacement about a first axis; and
a second gear in constant meshing engagement with said first gear, said second gear supported by said caliper body between said first gear and said ball-ramp assembly for rotational displacement about a second axis substantially perpendicular to said first axis;
wherein said second gear is adapted to actuate said ball-ramp assembly, to translate rotational displacement of said second gear into axial displacement of said piston along said second axis, thereby actuating the parking brake mechanism.

16. The caliper assembly of claim 15, further comprising an input shaft for rotatably driving said first gear.

17. The caliper assembly of claim 16, further comprising a lever for rotatably driving said input shaft.

18. The caliper assembly of claim 15, wherein said first and second gears are bevel gears.

19. The caliper assembly of claim 15, wherein said first and second gears are screw gears.

20. The caliper assembly of claim 15, wherein said first gear is a worm gear and said second gear is a worm wheel.

21. The caliper assembly 15, wherein said first gear is a worm wheel and said second gear is a worm gear.

22. The caliper assembly of claim 15, wherein said ball-ramp assembly includes a first ramp plate having a first ramped surface, a second ramp plate having a second ramped surface, and a bearing member disposed therebetween adapted to move from a first position to a second position on said first and second ramped surfaces.

23. The caliper assembly of claim 22, wherein said first and second ramped surfaces each include a shallow portion and a deep portion and are configured such that said bearing member simultaneously contacts said deep portions when in said first position and said shallow portions when in said second position, thereby causing axial displacement of said second ramp plate along said second axis.

24. The caliper assembly of claim 22, wherein said bearing member is a ball bearing.
